# EUROPÄISCHE PATENTSCHRIFT

(11) **EP 1 061 470 B1**
(45) Veröffentlichungstag und Bekanntmachung des Hinweises auf die Patenterteilung: **01.08.2007**
(21) Anmeldenummer: 00104031.0
(22) Anmeldetag: 26.02.2000
(51) Int. Cl.: G06K 13/06, B65H 29/12

(54) **Transporteinrichtung für Informationsträger, insbesondere Karten**
Transport device for information carrier, particulary for cards
Dispositif de transport de support d'information, en particulier de cartes

(30) Priorität: 12.06.1999 DE 19926885
(43) Veröffentlichungstag der Anmeldung: 20.12.2000
(73) Patentinhaber: Atlantic ZeiserGmbH, 78576 Emmingen (DE)
(72) Erfinder: Berndtsson, Anders, Dipl.-Ing., 8260 Stein am Rhein (CH)
(74) Vertreter: Kratzsch, Volkhard

(56) Entgegenhaltungen:
- DE-A- 4 302 827
- DE-B- 1 169 277
- FR-A- 1 417 468
- FR-A- 2 766 945
- GB-A- 446 667
- GB-A- 473 996
- US-A- 5 397 426

## Beschreibung

Die Erfindung bezieht sich auf eine Transporteinrichtung für Informationsträger, insbesondere Karten, der im übrigen im Oberbegriff des Anspruchs 1 genannten Art.

Es sind Transporteinrichtungen dieser Art bekannt (DE 196 10 030 C2, EP 0 623 894 A1), die jedoch für einen Transport mit großer Leistung, d.h. z.B. mit einem Durchsatz von z.B. etwa 40.000 bis 48 000 Informationsträger pro Stunde, ungeeignet sind, da sie bei dieser hohen Leistung keine zuverlässige Kodierung der Informationsträger ermöglichen.

DE1169277 beschreibt bogenverarbeitende Maschinen in denen die Bogen zwischen endlosen Förderbändern bewegt werden, wobei ein Druckluftpolster erzeugt wird, welches die Bogen gegen die Fördereinrichtung drückt.

Der Erfindung liegt die Aufgabe zugrunde, eine Transporteinrichtung der eingangs genannten Art so auszubilden, daß diese auch bei sehr großer Transportleistung und großem Durchsatz eine zuverlässige, störungsfreie Kodierung der hindurchtransportierten Informationsträger gewährleistet.

Die Aufgabe ist bei einer Transporteinrichtung der eingangs genannten Art gemäß der Erfindung durch die Merkmale im Anspruch 1 gelöst. Vorteilhafte weitere Erfindungsmerkmale und Ausgestaltungen dazu ergeben sich aus den übrigen Ansprüchen,

Weitere Einzelheiten und Vorteile der Erfindung ergeben sich aus der nachfolgenden Beschreibung, auf die zur Vermeidung unnötiger Wiederholungen verwiesen wird.

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: eine schematische Draufsicht von Teilen einer Transporteinrichtung für Informationsträger,
- Fig. 2: eine schematische Seitenansicht in Pfeilrichtung II in Fig. 1 einer Einzelheit der Transporteinrichtung in Fig. 1,
- Fig. 3: einen schematischen Schnitt entlang der Linie III-III in Fig. 2.

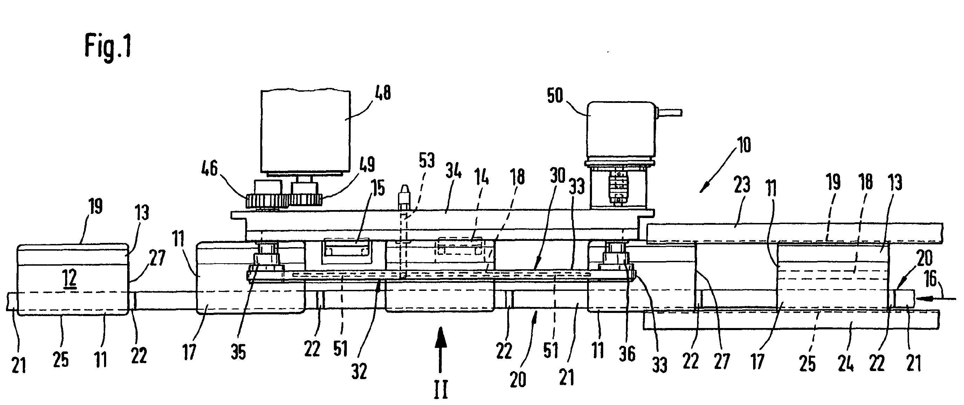

In den Zeichnungen ist der hier interessierende Teil einer Transporteinrichtung 10 gezeigt, die für Informationsträger 11, insbesondere für Karten, bestimmt ist. Die Informationsträger 11 gleicher Art sind z.B. auf ihrer in Fig. 1 oben verlaufenden Oberseite 12 zumindest auf einem Teil der Oberfläche mit einem schematisch angedeuteten, längsgerichteten Magnetstreifen 13 versehen und werden beim Durchgang durch die Transporteinrichtung 10 auf ihrer in Fig. 1 unten verlaufenden Unterseite und/oder auf ihrer Oberseite 12 bedruckt oder mit sonstigen Informationen versehen. Dazu gehört auch, daß die einzelnen Informationsträger 11 an zumindest einem Codierkopf, hier z. B. an zwei Codierköpfen 14 und 15, vorbeibewegt werden, wobei z.B. der in Transportrichtung gesehen als erstes plazierte Codierkopf 14 als Schreibkopf und der andere Codierkopf 15 als Lesekopf fungieren. Mittels des Codierkopfes 14 wird der Magnetstreifen 13 mit entsprechenden Informationen beschrieben, die auf dem Magnetstreifen 13 gespeichert werden und vom als Lesekopf fungierenden Codierkopf 15 gelesen und geprüft werden, wenn der Informationsträger 11 an diesem Codierkopf 15 vorbeibewegt wird. Bei derartigen Informationsträgern, insbesondere Magnetkarten, handelt es sich z.B. um Kreditkarten, Telefonkarten, Kundenkarten od.dergl. mit speicherbaren Informationen versehbare Karten. Die Transporteinrichtung 10 ist Teil einer ansonsten nicht weiter gezeigten Maschine, die modular aufgebaut ist. Maschinen dieser Art in der Ausbildung gemäß der Erfindung haben eine Leistungsfähigkeit von ca. 40 000 bis 48 000 Stück pro Stunde. Diese Geschwindigkeit und dieser Ausstoß werden entscheidend dadurch ermöglicht, daß der jeweilige Informationsträger 11 dann, wenn dieser zum Codieren des Magnetstreifens 13 am Codierkopf 14 und danach zum Lesen am Codierkopf 15 vorbeigeführt wird, vibrationsfrei und immer in der gleichen Position verbleibend transportiert wird, weil sonst schon kleinste Vibrationen oder der kleinste Lageversatz zu großen Fehlern führen würden.

Die Transporteinrichtung 10 weist eine schematisch angedeutete, linear verlaufende Transportstrecke 20 auf, auf der die Informationsträger 11 aufliegend mitgenommen und vorwärtstransportiert werden. Die Transportstrecke 20 weist ein längsverlaufend in Pfeilrichtung 16 angetriebenes Band 21 auf, das mit Mitnehmern 22 versehen ist, die in vorgegebenen Abständen angeordnet sind und über die Oberseite des Bandes 21 nach oben hochragen. Hervorzuheben ist, daß hierbei der in Längsrichtung des Bandes 21 gemessene Abstand der Mitnehmer 22 voneinander sichtlich größer bemessen ist als die Länge der jeweiligen Informationsträger 11. Die Breite des Bandes 21 ist schmaler bemessen als die Breite des jeweiligen Informationsträgers 11. Jeder Informationsträger 11 liegt mit einem in Querabstand vom Magnetstreifen 13 verlaufenden schmalen Flächenbereich 17 und derart auf dem Band 21 auf und wird darauf und mittels dieses vorwärtstransportiert, daß der Bereich des Magnetstreifens 13 sowie ein in Querabstand sich daran anschließender, schematisch angedeuteter Flächenstreifen 18 des Informationsträgers 11 freiliegen. Das Band 21 ist aus einem Riemen z.B. aus Gummi oder Kunstgummi oder Kunststoff od.dergl. gebildet. Die Mitnehmer 22 bestehen aus hochragenden Querstegen, die sich über die ganze Breite des Bandes 21 erstrecken können. Auf einer Längsseite des Bandes 21 ist seitlich neben dem Band 21 eine etwa parallel dazu verlaufende Längsführung 23 für die zugewandte Längskante 19 des Informationsträgers 11 angeordnet. Auch auf der gegenüberliegenden Seite des Bandes 21 befindet sich eine entsprechende zweite Längsführung 24 für die andere zugewandte Längskante 25 des Informationsträgers 11. Die beiden Längsführungen 23,24 verlaufen etwa parallel zum Band 21 und erstrecken sich in Fig. 1 etwa bis zu einem Einlaufbereich 26 einer zweiten Transporteinrichtung 30, die modularer Teil der Transporteinrichtung 10 und der Maschine ist. Jede Längsführung 23,24 weist auf der Seite, die der zugeordneten Längskante 18 bzw. 25 des jeweiligen Informationsträgers 11 zugewandt ist, ein L-Profil oder statt dessen ein zur Seite hin gerichtetes und zur Seite offenes U-Profil auf. Durch die als Querstege gestalteten Mitnehmer 22, die jeweils an der rückseitigen Querkante 27 jedes Informationsträgers 11 anliegen können, wird bereits eine gewisse Ausrichtung und Stabilisierung der auf dem Band 21 aufliegenden einzelnen Informationsträger 11 erreicht. Durch die beidseitigen Längsführungen 23 und 24, die mit den zugeordneten Längskanten 19 bzw. 25 jedes Informationsträgers 11 zusammenarbeiten, wird eine zuverlässige Längsführung ohne Querversatz der einzelnen Informationsträger 11 beim Vorwärtstransport auf dem Band 21 gewährleistet.

Wie insbesondere Fig. 1 erkennen läßt, befindet sich die Transporteinrichtung 30 seitlich neben dem Band 21 und ist zu diesem etwa parallel verlaufend angeordnet, wobei die Transporteinrichtung 30 auf derjenigen Seite des Bandes 21 verläuft, die dem Flächenstreifen 18 und dem Magnetstreifen 13 sowie der Längskante 19 zugewandt ist, das heißt in Fig. 1 auf der dort oben verlaufenden Längsseite des Bandes 21. Allerdings ist zwischen dieser Längsseite des Bandes 21 und der Transporteinrichtung 30 ein wenn auch kleiner Abstand vorhanden. Der jeweilige Informationsträger 11 ist auf diese Weise auf dem Band 21 aufliegend bis zum Einlaufbereich 26 der Transporteinrichtung 30 transportierbar und in diesen Einlaufbereich 26 und an diese Transporteinrichtung 30 unter völliger Abkopplung vom Band 21 übergebbar, wobei der Informationsträger 11 dann, in Transportrichtung gemäß Pfeil 16 betrachtet, nach vom hin vom Mitnehmer 22 abgesetzt wird. Dies wird dadurch erreicht, daß die Transporteinrichtung 30 mit größerer Geschwindigkeit als das Band 21 angetrieben ist. Der Geschwindigkeitsunterschied ist z.B. derart gewählt, daß der jeweilige im Einlaufbereich 26 von der Transporteinrichtung 30 erfaßte und vorwärtstransportierte Informationsträger 11 in Längsrichtung des Bandes 21 mit seiner Querkante 27 von dessen bis dahin daran anliegendem Mitnehmer 22 nach vom hin abgesetzt wird. Der Geschwindigkeitsunterschied zwischen der Geschwindigkeit des Bandes 21 und derjenigen der Transporteinrichtung 30 ist derart gewählt, daß der jeweilige Informationsträger 11 dann, wenn er im dem Einlaufbereich 26 gegenüberliegenden Auslaufbereich 31 von der Transporteinrichtung 30 wieder freigegeben wird, auf einem zwischen zwei Mitnehmern 22 des Bandes 21 liegenden Bandbereich an das Band 21 übergeben wird und auf diesem dann aufliegend weiter vorwärtsbewegt wird. Die Transportgeschwindigkeit der Transporteinrichtung 30 kann z.B. auf etwa 2% größer als diejenige des Bandes 21 geregelt sein, was bereits ausreichend dafür ist, daß bei Übernahme jedes einzelnen Informationsträgers 11 von der Transporteinrichtung 30 der jeweilige Informationsträger 11 völlig vom Band 21 abgekoppelt wird, derart, daß keinerlei Vibrationen oder sonstige Bewegungen, die vom Band 21 her rühren können, auf den Informationsträger 11 übertragen werden.

Beim Vorwärtstransport der einzelnen Informationsträger 11, aufliegend auf dem Band 21, liegen sowohl der Flächenstreifen 18 als auch der Bereich des Magnetstreifens 13 auf der Oberseite 12 frei, so daß beide beim Erreichen des Einlauf bereichs 26 der Transporteinrichtung 30 zugänglich sind, und zwar der Flächenstreifen 18 zum Erfassen und Klemmen des Informationsträgers 11 mittels der Transporteinrichtung 30 und der Bereich des Magnetstreifens 13 freibleibend zu dem Zwecke, daß jeder Informationsträger 11 damit an den Codierköpfen 14 und 15 derart vorbeibewegbar ist, so daß von den Codierköpfen 14,15 der Bereich des Magnetstreifens 13 beschrieben bzw. gelesen Werden kann.

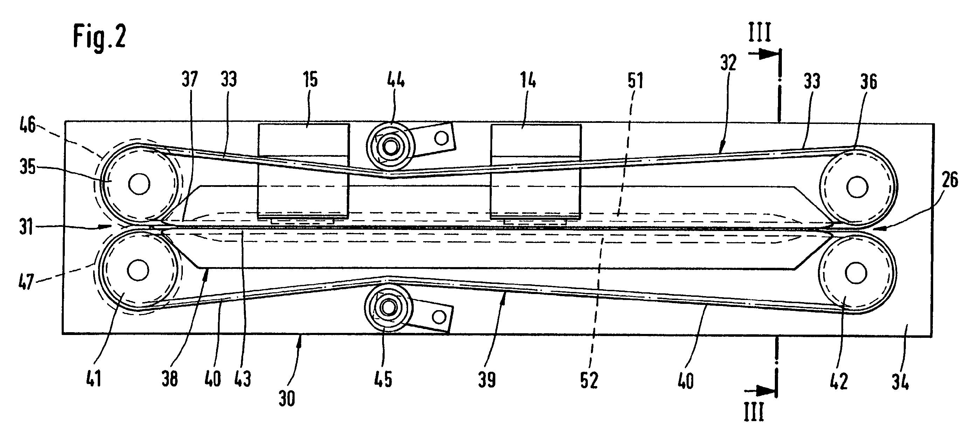

Nachfolgend sind nunmehr besondere Details der Transporteinrichtung 30 erläutert. Diese weist zumindest einen Riementrieb 32 mit einem Endlosriemen 33 auf, der über zwei in Abstand voneinander an einem Gehäuse 34 angeordnete, drehbare Umlenkrollen 35, 36 geführt ist. Der in Fig. 2 untere Trum 37 des Endlosriemens 33 kann sich im Bereich des angedeuteten Flächenstreifens 18 auf der Oberseite 12 jedes Informationsträgers 11 an die Oberfläche dieses anlegen. Die Transporteinrichtung 30 weist ferner einen dem Riementrieb 32 gegenüberliegenden, allgemein mit 38 bezeichneten Gegenhalter auf, an dem der eine Trum 37 unter Klemmung und Weitertransport eines eingezogenen Informationsträgers 11 anliegen kann. Dieser Gegenhalter 38 kann bei einem nicht gezeigten Ausführungsbeispiel aus einer Platte oder Leiste oder aus mindestens einer Rolle od.dergl. bestehen. Beim gezeigten Ausführungsbeispiel ist der Gegenhalter 38 als dem ersten Riementrieb 32 entsprechender zweiter Riementrieb 39 ausgebildet, der ebenfalls einen Endlosriemen 40 aufweist, der über zwei in Abstand voneinander am Gehäuse 34 angeordnete und drehbare Umlenkrollen 41, 42 geführt ist, wobei an dessen in Fig. 2 oberen Trum 43 der andere Trum 37 des ersten Riementriebes 32 unter Klemmung und Weitertransport eines eingezogenen Informationsträgers 11 anliegen kann.

Jeder Riementrieb 32, 39 weist für den Endlosriemen 33 bzw. 40 eine Spannrolle 44 bzw. 45 üblicher Art auf.

Der Klemmabstand zwischen dem mindestens einen Riementrieb 32 und dem Gegenhalter 38, insbesondere zweiten Riementrieb 39, ist verstellbar, so daß eine Einstellung auf unterschiedliche Querschnittsdicken der Informationsträger 11, z.B. in der Größenordnung zwischen 0,25 mm und 1,5 mm, möglich ist.

Der erste Riementrieb 32 ist mit dem zweiten Riementrieb 39 über getriebliche Mittel getrieblich verbunden und synchronisiert, die hier aus zwei miteinander in Eingriff stehenden Zahnrädern 46 und 47 bestehen. Der mindestens eine Riementrieb, z.B. der erste Riementrieb 32, ist mittels eines elektrischen Antriebsmotors 48, insbesondere Servomotors, über ein Ritzel 49 angetrieben, das z.B. direkt mit dem einen Zahnrad 46 in Eingriff stehen kann. Die Geschwindigkeit des ersten Riementriebes 32, insbesondere des Endlosriemens 33, ist regelbar, z.B. dadurch , daß die Drehzahl des Antriebsmotors 48 in Abhängigkeit von der Geschwindigkeit des Bandes 21 vorzugsweise mittels eines die jeweilige Bandgeschwindigkeit erfassenden Winkelcodierers 50 geregelt wird.

Der jeweilige Endlosriemen 33 bzw. 40 ist als Zahnriemen ausgebildet und besteht z.B. aus Gummi oder Kunstgummi oder Kunststoff od.dergl. Die Umlenkrollen 35, 36 bzw. 41, 42 sind in Anpassung an den jeweiligen Zahnriemen als Zahnräder oder Zahnrollen ausgebildet, mit denen die Zähne des jeweiligen Endlosriemens 33 bzw. 40 formschlüssig in Eingriff sind.

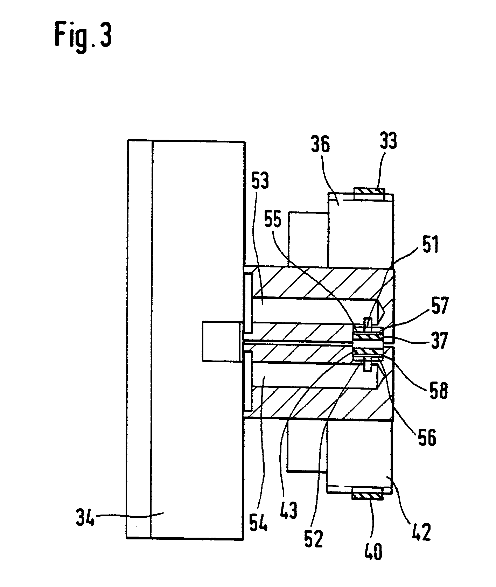

Wie insbesondere aus Fig. 1 und Fig. 3 ersichtlich ist, ist der mindestens eine Endlosriemen 33 des ersten Riementriebes 32 ebenso wie der Endlosriemen 40 des zweiten Riementriebes 39 hinsichtlich seiner Breite deutlich schmaler als die Breite des jeweiligen Informationsträgers 11 bemessen, damit ein zwischen beiden Trums 37 und 43 eingezogener Informationsträger 11 längs eines zwischen beiden Längskanten 19 und 25 und außerhalb des Bereichs des Magnetstreifens 13 befindlichen Flächenstreifens 18 geklemmt und vorwärtstransportiert werden kann.

Wie insbesondere auch Fig. 2 erkennen läßt, sind die Codierköpfe 14,15 entlang dem Transportweg des jeweiligen Informationsträgers 11 in der Transporteinrichtung 30 und auf dem Längenbereich des Trums 37, 43 angeordnet, wobei die Codierköpfe 14, 15 auf dem Längenbereich zwischen den Umlenkrollen 35, 36 bzw. 41, 42 plaziert sind. Insbesondere ist der als Schreibkopf fungierende Codierkopf 14 in Abstand vom Einlaufbereich 26 und der als Lesekopf fungierende Codierkopf 15 in Abstand vor dem Auslaufbereich 31 angeordnet. Der Abstand zwischen beiden Codierköpfen 14,15 ist mindestens so groß wie die Länge jedes Informationsträgers 11. Zweckmäßigerweise ist dieser Abstand zwischen den Codierköpfen 14,15 sichtbar größer als die Länge jedes Informationsträgers 11. Dies führt zu dem Vorteil, daß dann, wenn sich noch im Bereich des Codierkopfes 15 ein Informationsträger 11 befindet, noch kein Informationsträger 11 in den Bereich des Codierkopfes 14 gelangen kann. Damit ist etwaigen Störungen, insbesondere Stößen, die sonst auf die Informationsträger 11 wirken könnten , vorgebeugt.

Eine weitere, wesentliche Besonderheit der Transporteinrichtung 10, insbesondere der modularen Transporteinrichtung 30 dieser, liegt darin, daß zumindest der Trum 37 des mindestens einen Riementriebes 32, der sich an die Oberseite 12 im Bereich des Flächenstreifens 18 an jeden Informationsträger 11 anlegt, auf der Seite, die dem Informationsträger 11 abgewandt ist, zumindest bereichsweise dauernd oder zumindest zeitweilig mit Druckgas, insbesondere Druckluft, im Sinne einer zusätzlichen Anpressung des Trums 37 an die Oberseite 12 des Informationsträgers 12 beaufschlagt ist. Beim gezeigten Ausführungsbeispiel ist sowohl beim ersten Riementrieb 32 dessen Trum 37 als auch beim zweiten Riementrieb 39 dessen Trum 43 in entsprechender Weise mit Druckgas, insbesondere Druckluft, beaufschlagt, wobei die Wirkungsrichtung dergestalt ist, daß die beiden Trums 37 und 43 unter der Wirkung des Druckgases, insbesondere der Druckluft, gegeneinander gepreßt werden, so daß auf den dazwischen geklemmten jeweiligen Informationsträger 11 eine erhöhte Klemmkraft wirkt. Diese erhöhte Klemmkraft ist über den jeweiligen Druck des Druckgases, insbesondere der Druckluft, einstellbar und führt dazu, daß jeder einzelne zwischen den beiden Trums 37 und 43 erfaßte und geklemmte Informationsträger 11 dann, nachdem er vom Band 21 der Transportstrecke 20 abgekoppelt wurde, in dieser Ausrichtung zuverlässig, fest und rutschsicher sowie vibrationsfrei geklemmt und mittels der Transporteinrichtung 30 entlang den Codierköpfen 14, 15 geführt und hiernach wieder an das Band 21 abgegeben wird. Der jeweilige mit Druckgas, insbesondere Druckluft, beaufschlagte Trum 37, 43 ist hierbei nicht nur auf einem kurzen Längsbereich sondern im wesentlichen über seine ganze freie, sich zwischen den jeweiligen Umlenkrollen 35, 36 bzw. 44, 45 erstreckende Länge und/oder Breite und hierbei vorzugsweise möglichst gleichmäßig mit Druckgas, insbesondere Druckluft, beaufschlagt. Der Druck, mit dem das Druckgas den jeweiligen Trum 37, 43 beaufschlagt, ist regelbar und hinsichtlich seines Wertes auf einen solchen mit entsprechend ausreichender, auf den jeweiligen Informationsträger 11 wirkender Klemmkraft einstellbar.

Wie in Fig. 1 und 2 nur angedeutet ist und im Detail aus Fig. 3 ersichtlich ist, weist das Gehäuse 34 auf der Seite des jeweiligen Trums 37, 43, die dem Informationsträger 11 jeweils abgewandt ist und mit Druckgas beaufschlagt ist, ein oder mehrere Auslaßöffnungen 51 einerseits bzw. 52 andererseits für das Druckgas auf, die z.B. als Schlitzdüsen ausgebildet sind und jeweils mit einem zugeordneten Zufuhrkanal 53 bzw. 54 in Verbindung stehen. Wie Fig. 1 und 2 zeigen, sind in Laufrichtung des jeweils mit Druckgas beaufschlagten Trums 37 bzw. 43 mehrere Auslaßöffnungen 51, 52, und zwar eine Vielzahl solcher Auslaßöffnungen 51, 52, in Abstand voneinander angeordnet. In ihrer Ausbildung als Schlitze sind diese Auslaßöffnungen 51, 52 dabei mit ihrer langen Seite in Laufrichtung des jeweiligen Trums 37 bzw. 43 ausgerichtet, so daß jeder Trum 37 bzw. 43 über seine Länge und Breite möglichst gleichmäßig mit Druckgas, insbesondere Druckluft, beaufschlagt ist.

Bei einem anderen, nicht gezeigten Ausführungsbeispiel sind die Auslaßöffnungen 51, 52 als quer verlaufende Öffnungen, z.B. Schlitzdüsen, gestaltet, wobei deren Breite z.B. etwa so groß wie die Breite des jeweiligen Trums 37 bzw. 43 sein kann. Wie Fig. 1 und 2 zeigt, ist eine Reihe von Auslaßöffnungen 51, 52 vorgesehen, die sich praktisch über die ganze Länge zwischen den beiden Umlenkrollen 35, 36 und 41, 42 erstreckt.

Dem jeweiligen Trum 37 bzw. 43, der mit Druckgas beaufschlagt ist, ist auf der dem jeweiligen Informationsträger 11 abgewandten Seite eine Stützfläche 55 bzw. 56 zugeordnet (Fig. 3), die Teil des Gehäuses 34 ist und die Auslaßöffnungen 51, 52, insbesondere Schlitzdüsen, enthält. Wie aus Fig. 3 ersichtlich sind, münden die jeweiligen Auslaßöffnungen 51, 52 in die zugeordnete jeweilige Stützfläche 55, 56. Die einzelnen Auslaßöffnungen 51 können, in Längsrichtung des Trums 37, betrachtet über einen Verbindungskanal miteinander in Verbindung stehen, so daß nur ein einziger Zufuhrkanal 53 im Gehäuse 34 nötig ist, um diese Auslaßöffnungen 51 mit Druckgas, insbesondere Druckluft, zu versorgen. In gleicher Weise kann auch die Versorgung der gegenüberliegenden Auslaßöffnungen 52 erfolgen. Dem einen Trum 37 ist dabei die Stützfläche 55 mit den Auslaßöffnungen 51 zugeordnet, während dem anderen Trum 43 die andere Stützfläche 56 mit den Auslaßöffnungen 52 zugeordnet ist, wobei die Auslaßöffnungen 51, 52 jeweils auf der Seite des Trums 37 bzw. 43 ausmünden, die dem jeweiligen zu klemmenden und hindurch zu transportierenden Informationsträger 11 abgewandt ist. Die Breite der Stützfläche 55 bzw. 56 kann breiter als diejenige des Endlosriemens 33 bzw. 40 gewählt sein. Beim gezeigten Ausführungsbeispiel enthält die jeweilige Stützfläche 55, 56 eine eingetiefte Nut 57 bzw. 58, in deren Bodenfläche die Auslaßöffnungen 51 bzw. 52 enthalten sind. Die jeweilige Nut 57, 58 hat eine Breite, die etwa derjenigen des zugeordneten Endlosriemens 33 bzw. 40 entspricht, wobei die jeweilige Nut 57, 58 als Führung für den jeweiligen Endlosriemen 33 bzw. 40 ausgebildet ist und somit eine sichere Querführung für den jeweiligen Trum 37 bzw. 43 bewirkt..

Wie sich aus Fig. 1 ergibt, verläuft der Endlosriemen 33 des ersten Riementriebes 32 und der Endlosriemen 40 des zweiten Riementriebes 39 im wesentlichen innerhalb einer gemeinsamen vertikalen Ebene, wobei kein Längsversatz der Endlosriemen 33,40 zueinander vorgesehen ist. Dabei befindet sich die so gestaltete Transporteinrichtung 30 etwa im Längsbereich des in Fig. 1 oberen Längsrandes des Bandes 21 und dabei im Längsbereich des in Fig. 1 unteren bzw. in Fig. 3 rechten Längsrandes der jeweiligen Stützfläche 55, 56.

Die einzelnen auf dem Band 21 aufliegenden und mittels dieses in Pfeilrichtung 16 vorwärts transportierten Informationsträger 11 werden durch Längsführungen 23, 24 zuverlässig in Längsrichtung ausgerichtet und geführt, bis sie den Einlaufbereich 26 der besonderen Transporteinrichtung 30 erreichen und dort zwischen den Trums 37 und 43 erfaßt, geklemmt und weiter vorwärts transportiert werden. Die Erfassung und Klemmung geschieht dabei im Bereich des Flächenstreifens 18, so daß nach wie vor der Bereich des Magnetstreifens 13 freiliegt. Sobald ein Informationsträger 11 im Einlaufbereich 26 erfaßt und geklemmt worden ist, wird dieser zumindest geringfügig von der Oberseite des Bandes 21 abgehoben und aufgrund der etwas größeren Transportgeschwindigkeit der Transporteinrichtung 30 mit seiner Querkante 27 in Transportrichtung vom Mitnehmer 22 nach vom hin abgesetzt. Der jeweils zwischen den Trums 37, 43 sicher und fest geklemmte und gehaltene Informationsträger 11 ist somit gänzlich vom Band 21 abgekoppelt, so daß keinerlei etwaige von dort herrührende Schwingungen, Kräfte od.dergl. auf den Informationsträger 11 einwirken können. Der Informationsträger 11 wird in dieser Weise mittels der beiden Riementriebe 32, 39 vom Einlaufbereich 26 in Richtung zum Auslaufbereich 31 transportiert, wobei zunächst der als Schreibkopf fungierende Codierkopf 14 passiert wird, mittels dessen auf den Magnetstreifen 13 die entsprechenden Informationen gespeichert werden. Danach wird der als Lesekopf fungierende Codierkopf 15 passiert, mittels dessen die gespeicherten Informationen abgefragt und geprüft werden. Hiernach gelangt der Informationsträger 11 zum Auslaufbereich 31 und wird nach Verlassen dieses in der gleichen Ausrichtung wieder auf die Oberseite des Bandes 21 abgegeben, und zwar mit seiner rückseitigen Querkante 27 vor einem Mitnehmer 22, der sodann aufgrund des etwas langsameren Laufs des Bandes 21 an der Querkante 27 wieder anschlagen und damit den Informationsträger 11 formschlüssig, auf dem Band 21 liegend, weiter transportieren kann.

## Patentansprüche

1. Transporteinrichtung für Informationsträger, mit zumindest einem Riementrieb (32) mit einem über zwei in Abstand voneinander an einem Gehäuse (34) angeordnete Umlenkrollen (35,36) geführten Endlosriemen (33), dessen einer Trum (37) sich im Bereich eines Flächenstreifens (18) an die Oberfläche des Informationsträgers (11) anlegt, und mit einem dem Riementrieb (32) gegenüberliegenden Gegenhalter (38), an dem der eine Trum (37) unter Klemmung und Weitertransport eines eingezogenen Informationsträgers (11) anliegen kann,
**dadurch gekennzeichnet,**
**daß** der Trum (37) des mindestens einen Riementriebes (32), der sich an die Oberfläche, z.B. Oberseite (12), des Informationsträgers (12) anlegt, auf der dem Informationsträger (11) abgewandten Seite zumindest bereichsweise dauernd oder zumindest zeitweilig mit Druckgas im Sinne einer zusätzlichen Anpressung an den Informationsträger (11) beaufschlagt ist.

2. Transporteinrichtung nach Anspruch 1,
**dadurch gekennzeichnet,**
**daß** das Gehäuse (34) auf der Seite des mit Druckgas beaufschlagten Trums (37) des mindestens einen Riementriebes (32), die dem Informationsträger (11) abgewandt ist, ein oder mehrere Auslaßöffnungen (51,52) für das Druckgas aufweist, die mit zumindest einem Zufuhrkanal (53,54) in Verbindung stehen.

3. Transporteinrichtung nach Anspruch 2,
**dadurch gekennzeichnet,**
**daß** in Laufrichtung des mit Druckgas beaufschlagten Trums (37) des mindestens einen Riementriebes (32) mehrere Auslaßöffnungen (51,52) in Abstand voneinander angeordnet sind.

4. Transporteinrichtung nach einem der Ansprüche 1 bis 3,
**dadurch gekennzeichnet,**
**daß** der mit Druckgas beaufschlagte Trum (37) des mindestens einen Riementriebes (32) im wesentlichen über seine ganze freie, sich zwischen den beiden Umlenkrollen (35,36) erstreckende Länge und/oder Breite, und hierbei vorzugsweise möglichst gleichmäßig, mit Druckgas beaufschlagt ist.

5. Transporteinrichtung nach einem der Ansprüche 2 bis 4,
**dadurch gekennzeichnet,**
**daß** die Auslaßöffnungen (51,52) in der Ausbildung als Schlitze mit ihrer langen Seite in Laufrichtung des Trums (37) ausgerichtet sind.

6. Transporteinrichtung nach Anspruch 3,
**dadurch gekennzeichnet,**
**daß** sich die Auslaßöffnungen (51,52), quer zum Trum (37) erstrecken und deren Breite etwa so groß wie diejenige des Endlosriemens (33) des mindestens einen Riementriebes (32) gewählt ist.

7. Transporteinrichtung nach einem der Ansprüche 2 bis 6,
**dadurch gekennzeichnet,**
**daß** dem mit Druckgas beaufschlagten Trum (37) des mindestens einen Riementriebes (32) eine auf dessen dem Informationsträger (11) abgewandter Seite verlaufende Stützfläche (55,56) des Gehäuses (34) zugeordnet ist und daß die Stützfläche (55,56) die Auslaßöffnungen (51,52) enthält.

8. Transporteinrichtung nach einem der Ansprüche 2 bis 7,
**dadurch gekennzeichnet,**
**daß** der mindestens eine mit den Auslaßöffnungen (51,52), in Verbindung stehende Zufuhrkanal (53,54) im Gehäuse (34) enthalten ist.

9. Transporteinrichtung nach einem der Ansprüche 1 bis 8,
**dadurch gekennzeichnet,**
**daß** der Druck, mit dem das Druckgas den einen Trum (37) des mindestens einen Riementriebes (32) beaufschlagt, regelbar ist und dessen Wert auf einen solchen mit entsprechend ausreichender, auf den Informationsträger (11) wirkender Klemmkraft einstellbar ist.

10. Transporteinrichtung nach einem der Ansprüche 1 bis 9,
**dadurch gekennzeichnet,**
**daß** entlang dem Transportweg des Informationsträgers (11) und auf dem Längenbereich des Trums (37) des mindestens einen Riementriebes (32) zumindest ein Codierkopf (14,15) für die Informationen des Informationsträgers (11), z.B. für einen Magnetstreifen (13) auf einer Magnetkarte, angeordnet sind.

11. Transporteinrichtung nach einem der Ansprüche 1 bis 10,
**gekennzeichnet durch**
einen Einlaufbereich (26) am Anfang und einen Auslaufbereich (31) am Ende des mindestens einen Riementriebes (32).

12. Transporteinrichtung nach Anspruch 11,
**dadurch gekennzeichnet,**
**daß** in Abstand vom Einlaufbereich (26) ein als Schreibkopf wirksamer Codierkopf (14) angeordnet ist und daß in einem solchen Abstand von diesem Codierkopf (14), der mindestens so groß wie die Länge des jeweiligen Informationsträgers (11) ist, ein zweiter Codierkopf (15) angeordnet ist.

13. Transporteinrichtung nach einem der Ansprüche 1 bis 12,
**dadurch gekennzeichnet,**
**daß** der mindestens eine Riementrieb (32) mittels eines elektrischen Antriebsmotors (48) angetrieben ist und daß die Bandgeschwindigkeit des Riementriebes (32), z.B. die Drehzahl des Antriebsmotors (48), regelbar ist.

14. Transporteinrichtung nach einem der Ansprüche 1 bis 13,
**dadurch gekennzeichnet,**
**daß** der Klemmabstand zwischen dem mindestens einen Riementrieb (32) und dem Gegenhalter (38) verstellbar ist.

15. Transporteinrichtung nach einem der Ansprüche 1 bis 14,
**dadurch gekennzeichnet,**
**daß** der dem mindestens einen Riementrieb (32) gegenüberliegende Gegenhalter (38) als diesem Riementrieb (32) entsprechender zweiter Riementrieb (39) ausgebildet ist, der ebenfalls einen über zwei in Abstand voneinander am Gehäuse (34) angeordnete Umlenkrollen (41,42) geführten Endlosriemen (40) aufweist, an dessen einen Trum (43) ein Trum (37) des anderen, ersten Riementriebes (32) unter Klemmung und Weitertransport eines eingezogenen Informationsträgers (11) anliegen kann.

16. Transporteinrichtung nach Anspruch 15,
**dadurch gekennzeichnet,**
**daß** der Trum (43) des zweiten Riementriebes (39), der sich an die Oberfläche, z.B. Unterseite, des Informationsträgers (11) auf der Seite, die dem Trum (37) des ersten Riementriebes (32) abgewandt ist, anlegt, auf der dem Informationsträger abgewandten Seite zumindest bereichsweise dauernd oder zumindest zeitweilig mit Druckgas, im Sinne einer zusätzlichen Anpressung an den Informationsträger (11) beaufschlagt ist.

17. Transporteinrichtung nach einem der Ansprüche 1 bis 16,
**dadurch gekennzeichnet,**
**daß** der erste Riementrieb (32) mit dem zweiten Riementrieb (39) über getriebliche Mittel, z.B. zwei in Eingriff stehende Zahnränder (46,47), getrieblich verbunden und synchronisiert ist.

18. Transporteinrichtung nach einem der Ansprüche 1 bis 17,
**dadurch gekennzeichnet,**
**daß** der jeweilige Endlosriemen (33,40) als aus Gummi oder Kunstgummi oder Kunststoff oder dergleichen bestehender Zahnriemen ausgebildet ist, der über als zugeordnete Zahnräder ausgebildete Umlenkrollen (35,36 bzw. 41,42) geführt ist.

19. Transporteinrichtung nach einem der Ansprüche 1 bis 18,
**dadurch gekennzeichnet,**
**daß** jedem Trum (37,43) des Riementriebes (32,39), der unter Druckgas an den Informationsträger (11) unter Klemmung dieses dazwischen anpreßbar ist, eine Stützfläche (55 bzw. 56) des Gehäuses (34) zugeordnet ist.

20. Transporteinrichtung nach Anspruch 19,
**dadurch gekennzeichnet,**
**daß** die jeweilige Stützfläche (55,56) des Gehäuses (34) breiter als der jeweilige Endlosriemen (33,40) bemessen ist.

21. Transporteinrichtung nach einem der Ansprüche 1 bis 20,
**dadurch gekennzeichnet,**
**daß** die jeweilige Stützfläche (55,56) eine eingetiefte, etwa der Breite des Endlosriemens (33,40) entsprechende und als Bandführung ausgebildete Nut (57,58) enthält, in deren Bodenfläche die Auslaßöffnungen (51,52) enthalten sind.

22. Transporteinrichtung nach einem der Ansprüche 1 bis 21,
**dadurch gekennzeichnet,**
**daß** der mindestens eine Endlosriemen (33,40) schmaler als die Breite des Informationsträgers (11) bemessen ist und ein eingezogener Informationsträger (11) längs eines zwischen seinen beiden Längskanten (19,25) und außerhalb des Bereichs des Magnetstreifens (13) befindlichen Flächenstreifens (18) mittels des mindestens einen Riementriebes (32,39) geklemmt und vorwärts transportiert wird.

23. Transporteinrichtung nach einem der Ansprüche 1 bis 22,
**dadurch gekennzeichnet,**
**daß** der Endlosriemen (33,40) des jeweiligen Riementriebes (32,39) etwa im Längsbereich eines Längsrandes der jeweiligen Stützfläche (55,56) verläuft.

24. Transporteinrichtung für Informationsträger, insbesondere Karten, mit einer linear verlaufenden Transportstrecke (20), auf der die Informationsträger (11) aufliegend mitgenommen und vorwärtstransportiert werden, nach einem oder mehreren der vorhergehenden Ansprüche,
**dadurch gekennzeichnet,**
**daß** die Transportstrecke (20) ein längsverlaufend angetriebenes Band (21) mit in vorgegebenen Abständen über dessen Oberseite nach oben hochragenden Mitnehmern (22) aufweist, wobei der in Längsrichtung des Bandes (21) gemessene Abstand der Mitnehmer (22) voneinander größer bemessen ist als die Länge der jeweiligen Informationsträger (11).

25. Transporteinrichtung nach einem der Ansprüche 1 bis 24,
**dadurch gekennzeichnet,**
**daß** der mindestens eine Riementrieb (32,39) seitlich neben dem Band (21) und zu diesem etwa parallel verlaufend angeordnet ist.

26. Transporteinrichtung nach einem der Ansprüche 1 bis 25,
**dadurch gekennzeichnet,**
**daß** der jeweilige Informationsträger (11) auf dem Band (21) aufliegend bis zum Einlaufbereich (26) des mindestens einen Riementriebes (32,40) transportierbar und in den Einlaufbereich (26) und an den mindestens einen Riementrieb (32,39) unter gänzlicher Abkopplung vom Band (21) übergebbar ist.

27. Transporteinrichtung nach einem der Ansprüche 1 bis 26,
**dadurch gekennzeichnet,**
**daß** der mindestens eine Riementrieb (32,39) mit größerer Geschwindigkeit als das Band (21) angetrieben ist.

28. Transporteinrichtung nach Anspruch 27,
**dadurch gekennzeichnet,**
**daß** der Geschwindigkeitsunterschied derart gewählt ist, daß der jeweilige im Einlaufbereich (26) vom mindestens einen Riementrieb (32,39) erfaßte, geklemmte und vorwärtstransportierte Informationsträger (11) in Längsrichtung des Bandes (21) von dessen Mitnehmer (22) nach vom hin abgesetzt wird.

29. Transporteinrichtung nach Anspruch 27,
**dadurch gekennzeichnet,**
**daß** der Geschwindigkeitsunterschied derart gewählt ist, daß der jeweilige im Auslaufbereich (31) vom mindestens einen Riementrieb (32,39) freigegebene Informationsträger (11) auf einem zwischen zwei Mitnehmern (22) des Bandes (21) liegenden Bandbereich dem Band (21) übergeben wird.

30. Transporteinrichtung nach einem der Ansprüche 27 bis 29,
**dadurch gekennzeichnet,**
**daß** die Geschwindigkeit des mindestens einen Riementriebes (32,39) auf etwa 2% größer als diejenige des Bandes (21) geregelt ist.

31. Transporteinrichtung nach einem der Ansprüche 1 bis 30,
**dadurch gekennzeichnet,**
**daß** der Antriebsmotor (48) des mindestens einen Riementriebes (32,39) in Abhängigkeit von der Geschwindigkeit des Bandes (21) geregelt wird, vorzugsweise mittels eines die jeweilige Geschwindigkeit des Bandes (21) erfassenden Winkelkodierers (50).

32. Transporteinrichtung nach einem der Ansprüche 1 bis 31,
**dadurch gekennzeichnet,**
**daß** die Breite des Bandes (21) schmaler bemessen ist als die Breite des jeweiligen Informationsträgers (11) und daß jeder Informationsträger (11) mit einem in Querabstand vom Magnetstreifen (13) verlaufenden schmalen Flächenbereich (17) und derart auf dem Band (21) aufliegt und vorwärtstransportiert wird, daß der Bereich des Magnetstreifens (13) sowie ein in Querabstand sich daran anschließender Flächenstreifen (18) des Informationsträgers (11) frei liegen und der Informationsträger (11) bei Erreichen des Einlaufbereichs (26) des mindestens einen Riementriebes (32,39) im Bereich des sich mit Querabstand an den Bereich des Magnetstreifens (13) anschließenden Flächenstreifens (18) unter Freilassung des Magnetstreifenbereichs mittels des Riementriebes (32,39) klemmbar und unter Abkopplung vom Band (21) vorwärtstransportierbar ist.

33. Transporteinrichtung nach einem der Ansprüche 24 bis 32,
**dadurch gekennzeichnet,**
**daß** das Band (21) aus einem Riemen aus Gummi oder Kunstgummi oder Kunststoff od. dergl. gebildet ist.

34. Transporteinrichtung nach einem der Ansprüche 24 bis 33,
**dadurch gekennzeichnet,**
**daß** die Mitnehmer (22) aus hochragenden Querstegen gebildet sind.

35. Transporteinrichtung nach Anspruch 34,
**dadurch gekennzeichnet,**
**daß** die Querstege sich über die ganze Breite des Bandes (21) erstrecken.

36. Transporteinrichtung nach einem der Ansprüche 24 bis 35,
**dadurch gekennzeichnet,**
**daß** auf einer Längsseite des Bandes (21) seitlich neben diesem eine etwa parallel dazu verlaufende Längsführung (23) für die zugewandte Längskante (19) des Informationsträgers (11) angeordnet ist.

37. Transporteinrichtung nach Anspruch 36,
**dadurch gekennzeichnet,**
**daß** die Längsführung (23) sich in Längsrichtung etwa bis zum Einlaufbereich (26) des mindestens einen Riementriebes (32,39) erstreckt.

38. Transporteinrichtung nach Anspruch 36 oder 37,
**dadurch gekennzeichnet,**
**daß** auf der der einen Längsführung (23) gegenüberliegenden Seite des Bandes (21) eine zweite etwa bis zum Einlaufbereich (26) reichende Längsführung (24) angeordnet ist.

39. Transporteinrichtung nach einem der Ansprüche 36 bis 38,
**dadurch gekennzeichnet,**
**daß** die jeweilige Längsführung (23,24) auf der der Längskante (19,25) des Informationsträgers (11) zugewandten Seite ein L-Profil oder ein zur Seite hin gerichtetes und offenes U-Profil aufweist.

## Claims

1. Transporting apparatus for information carriers, having at least one belt drive (32) with an endless belt (33) which is guided over two deflecting rollers (35, 36) spaced apart from one another on a housing (34) and of which the one strand (37) is positioned against the surface of the information carrier (11), in the region of a surface-area strip (18), and having an abutment (38) which is located opposite the belt drive (32) and against which the one strand (37) can butt, while in the process clamping and advancing an information carrier (11) which has been drawn in, **characterized in that** the strand (37) of the at least one belt drive (32) which is positioned against the surface, e.g. top side (12), of the information carrier (11) is permanently or at least temporarily subjected at least in certain regions, on the side which is directed away from the information carrier (11), to the action of compressed gas, with the effect of it being additionally pressed against the information carrier (11).

2. Transporting apparatus according to Claim 1,
**characterized in that**, on that side of the strand (37) of the at least one belt drive (32), this strand being subjected to the action of compressed gas, which is directed away from the information carrier (11), the housing (34) has one or more outlet openings (51, 52) for the compressed gas, and these openings are connected to at least one feed channel (53, 54).

3. Transporting apparatus according to Claim 2, **characterized in that** a plurality of outlet openings (51, 52) are spaced apart from one another in the running direction of the strand (37) of the at least one belt drive (32), this strand being subjected to the action of compressed gas.

4. Transporting apparatus according to one of Claims 1 to 3, **characterized in that** the strand (37) of the at least one belt drive (32) is subjected to the action of compressed gas, preferably as uniformly as possible, substantially over its entire free width and/or length extending between the two deflecting rollers (35, 36).

5. Transporting apparatus according to one of Claims 2 to 4, **characterized in that** the outlet openings (51, 52), if designed as slots, have their long side oriented in the running direction of the strand (37).

6. Transporting apparatus according to Claim 3, **characterized in that** the outlet openings (51, 52) extend transversely to the strand (37), and their width is selected to be approximately equal to that of the endless belt (33) of the at least one belt drive (32).

7. Transporting apparatus according to one of Claims 2 to 6, **characterized in that** the strand (37) of the at least one belt drive (32), this strand being subjected to the action of compressed gas, is assigned a supporting surface (55, 56) which belongs to the housing (34) and runs on that side of the strand which is directed away from the information carrier (11), and **in that** the supporting surface (55, 56) contains the outlet openings (51, 52).

8. Transporting apparatus according to one of Claims 2 to 7, **characterized in that** the at least one feed channel (53, 54) connected to the outlet openings (51, 52) is contained in the housing (34).

9. Transporting apparatus according to one of Claims 1 to 8, **characterized in that** the pressure which the compressed gas exerts on the one strand (37) of the at least one belt drive (32) can be regulated, and its value can be adjusted to a correspondingly sufficient clamping force for acting on the information carrier (11).

10. Transporting apparatus according to one of Claims 1 to 9, **characterized in that** at least one coding head (14, 15) for the information of the information carrier (11), e.g. for a magnetic strip (13) on a magnetic card, is arranged along the transporting path of the information carrier (11) and on the length region of the strand (37) of the at least one belt drive (32).

11. Transporting apparatus according to one of Claims 1 to 10, **characterized by** an entry region (26) at the start, and an exit region (31) at the end, of the at least one belt drive (32).

12. Transporting apparatus according to Claim 11, **characterized in that** a coding head (14) acting as a writing head is arranged at a distance from the entry region (26), and **in that** a second coding head (15) is spaced apart from this coding head (14) by a distance which is at least equal to the length of the respective information carrier (11).

13. Transporting apparatus according to one of Claims 1 to 12, **characterized in that** the at least one belt drive (32) is driven by means of an electric drive motor (48), and **in that** the speed of the belt drive (32), e.g. the rotational speed of the drive motor (48), can be regulated.

14. Transporting apparatus according to one of Claims 1 to 13, **characterized in that** it is possible to adjust the clamping distance between the at least one belt drive (32) and the abutment (38).

15. Transporting apparatus according to one of Claims 1 to 14, **characterized in that** the abutment (38), which is located opposite the at least one belt drive (32), is designed as a second belt drive (39), which corresponds to this belt drive (32) and likewise has an endless belt (40) which is guided over two deflecting rollers (41, 42) spaced apart from one another on the housing (34) and against the one strand (43) of which can butt a strand (37) of the other, first belt drive (32), while at the same time clamping and advancing an information carrier (11) which has been drawn in.

16. Transporting apparatus according to Claim 15, **characterized in that** the strand (43) of the second belt drive (39) which is positioned against the surface, e.g. underside, of the information carrier (11), on the side which is directed away from the strand (37) of the first belt drive (32), is permanently or at least temporarily subjected at least in certain regions, on the side which is directed away from the information carrier, to the action of compressed gas, with the effect of it being additionally pressed against the information carrier (11).

17. Transporting apparatus according to one of Claims 1 to 16, **characterized in that** the first belt drive (32) is connected in terms of gearing to, and synchronized with, the second belt drive (39) via gear means, e.g. two engaging gearwheels (46, 47).

18. Transporting apparatus according to one of Claims 1 to 17, **characterized in that** the respective endless belt (33, 40) is designed as a toothed belt which consists of rubber or synthetic rubber or plastic or the like and is guided over deflecting rollers (35, 36 or 41, 42, respectively) designed as associated gearwheels.

19. Transporting apparatus according to one of Claims 1 to 18, **characterized in that** a supporting surface (55 or 56) of the housing (34) is assigned to each respective strand (37, 43) of the belt drive (32, 39) which can be pressed, under the action of compressed gas, against the information carrier (11), the strands clamping this information carrier between them in the process.

20. Transporting apparatus according to Claim 19, **characterized in that** the respective supporting surface (55, 56) of the housing (34) is dimensioned to be wider than the respective endless belt (33, 40).

21. Transporting apparatus according to one of Claims 1 to 20, **characterized in that** the respective supporting surface (55, 56) contains a recessed groove (57, 58) which corresponds approximately to the width of the endless belt (33, 40), is designed as a belt guide and the base surface of which contains the outlet openings (51, 52).

22. Transporting apparatus according to one of Claims 1 to 21, **characterized in that** the at least one endless belt (33, 40) is dimensioned to be narrower than the width of the information carrier (11), and a drawn-in information carrier (11) is clamped and advanced, by means of the at least one belt drive (32, 39), along a surface-area strip (18) located between its two longitudinal edges (19, 25) and outside the region of the magnetic strip (13).

23. Transporting apparatus according to one of Claims 1 to 22, **characterized in that** the endless belt (33, 40) of the respective belt drive (32, 39) runs approximately along the longitudinal region of a longitudinal periphery of the respective supporting surface (55, 56).

24. Transporting apparatus for information carriers, in particular cards, having a linear transporting section (20) on which the information carriers (11) are carried along and advanced in a state in which they rest thereon, according to one or more of the preceding claims, **characterized in that** the transporting section (20) has a longitudinally driven belt (21) with carry-along elements (22) which project upwards beyond its top side at predetermined spacings, the spacing between the carry-along elements (22), as measured in the longitudinal direction of the belt (21), being dimensioned to be greater than the length of the respective information carriers (11).

25. Transporting apparatus according to one of Claims 1 to 24, **characterized in that** the at least one belt drive (32, 39) is arranged laterally alongside the belt (21) and approximately parallel thereto.

26. Transporting apparatus according to one of Claims 1 to 25, **characterized in that** the respective information carrier (11) can be transported up to the entry region (26) of the at least one belt drive (32, 40) in a state in which it rests on the belt (21), and can be transferred into the entry region (26), and onto the at least one belt drive (32, 39), with complete separation from the belt (21).

27. Transporting apparatus according to one of Claims 1 to 26, **characterized in that** the at least one belt drive (32, 39) is driven at a greater speed than the belt (21).

28. Transporting apparatus according to Claim 27, **characterized in that** the difference in speed is selected such that the respective information carrier (11), which is gripped in the entry region (26) by the at least one belt drive (32, 39), clamped and advanced, is set down in the forward direction, as seen in the longitudinal direction of the belt (21), by the carry-along elements (22) of the latter.

29. Transporting apparatus according to Claim 27, **characterized in that** the difference in speed is selected such that the respective information carrier (11), which is released in the exit region (31) by the at least one belt drive (32, 39), is transferred to the belt (21) on a belt region which is located between two carry-along elements (22) of the belt (21).

30. Transporting apparatus according to one of Claims 27 to 29, **characterized in that** the speed of the at least one belt drive (32, 39) is regulated to be approximately 2% greater than that of the belt (21).

31. Transporting apparatus according to one of Claims 1 to 30, **characterized in that** the drive motor (48) of the at least one belt drive (32, 39) is regulated in dependence on the speed of the belt (21), preferably by means of an angle encoder (50) which senses the respective speed of the belt (21).

32. Transporting apparatus according to one of Claims 1 to 31, **characterized in that** the width of the belt (21) is dimensioned to be narrower than the width of the respective information carrier (11), and **in that** each information carrier (11), by way of a narrow surface-area region (17) which is transversely spaced apart from the magnetic strip (13), rests on the belt (21), and is advanced, such that the region of the magnetic strip (13) as well as a surface-area strip (18) of the information carrier (11), this surface-area strip adjoining the magnetic strip at a transverse spacing therefrom, are exposed and, upon reaching the entry region (26) of the at least one belt drive (32, 39), the information carrier (11) can be clamped and advanced by means of the belt drive (32, 39), while being separated from the belt (21) in the process, in the region of the surface-area strip (18) which adjoins the region of the magnetic strip (13) at a transverse spacing therefrom, the magnetic-strip region being left exposed during this time.

33. Transporting apparatus according to one of Claims 24 to 32, **characterized in that** the belt (21) is formed from rubber or synthetic rubber or plastic or the like.

34. Transporting apparatus according to one of Claims 24 to 33, **characterized in that** the carry-along elements (22) are formed from upwardly projecting transverse crosspieces.

35. Transporting apparatus according to Claim 34, **characterized in that** the transverse crosspieces extend over the entire width of the belt (21).

36. Transporting apparatus according to one of Claims 24 to 35, **characterized in that** arranged on a longitudinal side of the belt (21), laterally alongside the latter, is a longitudinal guide (23) which runs approximately parallel to the belt and is intended for the facing longitudinal edge (19) of the information carrier (11).

37. Transporting apparatus according to Claim 36, **characterized in that** the longitudinal guide (23) extends in the longitudinal direction approximately as far as the entry region (26) of the at least one belt drive (32, 39).

38. Transporting apparatus according to Claim 36 or 37, **characterized in that** a second longitudinal guide (24), which extends approximately as far as the entry region (26), is arranged on that side of the belt (21) which is located opposite the one longitudinal guide (23).

39. Transporting apparatus according to one of Claims 36 to 38, **characterized in that**, on the side which is directed towards the longitudinal edge (19, 25) of the information carrier (11), the respective longitudinal guide (23, 24) has an L-profile or a U-profile which is open and directed towards the side.

## Revendications

1. Dispositif de transport de supports d'informations, comprenant au moins une transmission à courroie (32) avec une courroie sans fin (33) guidée par deux poulies de renvoi (35, 36) écartées l'une de l'autre contre un boîtier (34), dont un brin (37) s'applique dans la zone d'un ruban plat (18) contre la surface du support d'informations (11), et avec un contre-support (38) opposé à la transmission à courroie (32) contre lequel peut s'appliquer un brin (37) lors du serrage et du transfert d'un support d'informations (11) inséré,
**caractérisé en ce que**
le brin (37) de ladite au moins une transmission à courroie (32) qui s'applique contre la surface, par exemple sur la face supérieure (12), du support d'informations (11) est soumis, au moins partiellement en continu ou au moins temporairement, sur la face opposée au support d'informations (11), à un gaz comprimé produisant une pression de contact supplémentaire contre le support d'informations (11).

2. Dispositif de transport selon la revendication 1,
**caractérisé en ce que**
le boîtier (34) présente, sur la face du brin (37) soumis au gaz comprimé de ladite au moins une transmission à courroie (32), qui est opposée au support d'informations (11), une ou plusieurs ouvertures d'évacuation (51, 52) pour le gaz comprimé qui sont en liaison avec au moins une conduite d'alimentation (53, 54).

3. Dispositif de transport selon la revendication 2,
**caractérisé en ce que**
dans le sens de déplacement du brin (37) soumis au gaz comprimé de ladite au moins une transmission à courroie (32), plusieurs ouvertures d'évacuation (51, 52) sont écartées les unes des autres.

4. Dispositif de transport selon l'une quelconque des revendications 1 à 3,
**caractérisé en ce que**
le brin (37) soumis au gaz comprimé de ladite au moins une transmission à courroie (32) s'étend entre les deux poulies de renvoi (35, 36) sensiblement sur toute sa longueur et/ou sa largeur, et est donc soumis au gaz comprimé de préférence le plus régulièrement possible.

5. Dispositif de transport selon l'une quelconque des revendications 2 à 4,
**caractérisé en ce que**
les ouvertures d'évacuation (51, 52) sont disposées comme des fentes avec leur grand côté dans le sens de déplacement du brin (37).

6. Dispositif de transport selon la revendication 3,
**caractérisé en ce que** les ouvertures d'évacuation (51, 52) s'étendent perpendiculairement au brin (37) et que leur largeur est choisie sensiblement aussi grande que celle de la courroie sans fin (33) de ladite au moins une transmission à courroie (32).

7. Dispositif de transport selon l'une quelconque des revendications 2 à 6,
**caractérisé en ce que**
au brin (37) soumis au gaz comprimé de ladite au moins une transmission à courroie (32) est associée une surface d'appui (55, 56) du boîtier (34) courant sur sa face opposée au support d'informations (11), et que la surface d'appui (55, 56) contient les ouvertures d'évacuation (51, 52).

8. Dispositif de transport selon l'une quelconque des revendications 2 à 7,
**caractérisé en ce que**
ladite au moins une conduite d'alimentation (53, 54) en liaison avec les ouvertures d'évacuation (51, 52) est contenue dans le boîtier (34).

9. Dispositif de transport selon l'une quelconque des revendications 1 à 8,
**caractérisé en ce que**
la pression à laquelle le gaz comprimé soumet le brin (37) de ladite au moins une transmission à courroie (32) est réglable et sa valeur peut être réglée sur une force de serrage correspondante suffisante agissant sur le support d'informations (11).

10. Dispositif de transport selon l'une quelconque des revendications 1 à 9,
**caractérisé en ce que**
le long de l'itinéraire de transport du support d'informations (11) et dans la zone longitudinale du brin (37) de ladite au moins une transmission à courroie (32) est disposée une tête de codage (14, 15) pour les informations du support d'informations (11), par exemple pour une bande magnétique (13) sur une carte magnétique.

11. Dispositif de transport selon l'une quelconque des revendications 1 à 10,
**caractérisé par**
une zone d'introduction (26) au début et une zone d'évacuation (31) à la fin de ladite au moins une transmission à courroie (32).

12. Dispositif de transport selon la revendication 11,
**caractérisé en ce que**
à distance de la zone d'introduction (26) est disposée une tête de codage (14) agissant comme tête d'écriture, et qu'à une distance de cette tête de codage (14) qui est au moins aussi grande que la longueur du support d'informations concerné (11) est disposée une deuxième tête de codage (15).

13. Dispositif de transport selon l'une quelconque des revendications 1 à 12,
**caractérisé en ce que**
ladite au moins une transmission à courroie (32) est entraînée par un moteur d'entraînement électrique (48) et que la vitesse de défilement de la transmission à courroie (32), par exemple la vitesse de rotation du moteur d'entraînement (48), est réglable.

14. Dispositif de transport selon l'une quelconque des revendications 1 à 13,
**caractérisé en ce que**
la distance de serrage entre ladite au moins une transmission à courroie (32) et le contre-support (38) est réglable.

15. Dispositif de transport selon l'une quelconque des revendications 1 à 14,
**caractérisé en ce que**
le contre-support (38) opposé à ladite au moins une transmission à courroie (32) est configuré comme une deuxième transmission à courroie (39) correspondant à cette transmission à courroie (32), qui présente également une courroie sans fin (40) guidée par deux poulies de renvoi (41, 42) écartées l'une de l'autre contre le boîtier (34), contre un brin (43) de laquelle peut s'appliquer un brin (37) de la première transmission à courroie (32) lors du serrage et du transfert d'un support d'informations (11) inséré.

16. Dispositif de transport selon la revendication 15,
**caractérisé en ce que**
le brin (43) de la deuxième transmission à courroie (39) qui s'applique contre la surface, par exemple la face inférieure, du support d'informations (11), sur la face qui est opposée au brin (37) de la première transmission à courroie (32) est soumis, au moins partiellement en continu ou au moins temporairement, sur la face opposée au support d'informations, à un gaz comprimé produisant une pression de contact supplémentaire contre le support d'informations (11).

17. Dispositif de transport selon l'une quelconque des revendications 1 à 16,
**caractérisé en ce que**
la première transmission à courroie (32) est reliée mécaniquement et synchronisée avec la deuxième transmission à courroie (39) par des moyens mécaniques, par exemple deux couronnes dentées en prise (46, 47).

18. Dispositif de transport selon l'une quelconque des revendications 1 à 17,
**caractérisé en ce que**
la courroie sans fin respective (33, 40) est configurée comme une courroie dentée en caoutchouc, en caoutchouc synthétique, en plastique ou autre, qui est guidée par des poulies de renvoi (35, 36 ou 41, 42) configurées comme des roues dentées associées.

19. Dispositif de transport selon l'une des revendications 1 à 18,
**caractérisé en ce que**
une surface d'appui (55 ou 56) du boîtier (34) est associée à chacun des brins (37, 43) de la transmission à courroie (32, 39) qui peut être appliqué lorsque le support d'informations (11) est soumis au gaz comprimé lors de son serrage.

20. Dispositif de transport selon la revendication 19,
**caractérisé en ce que**
la surface d'appui respective (55, 56) du boîtier (34) est plus large que la courroie sans fin respective (33, 40).

21. Dispositif de transport selon l'une quelconque des revendications 1 à 20,
**caractérisé en ce que**
la surface d'appui respective (55, 56) contient une rainure creusée (57, 58), correspondant sensiblement à la largeur de la courroie sans fin (33, 40) et configurée comme un guide de bande, dans le fond de laquelle se trouvent les ouvertures d'évacuation (51, 52).

22. Dispositif de transport selon l'une quelconque des revendications 1 à 21,
**caractérisé en ce que**
ladite au moins une courroie sans fin (33, 40) est plus étroite que la largeur du support d'informations (11), et qu'un support d'informations (11) inséré est serré et transporté vers l'avant le long d'un ruban plat (18) se trouvant entre ses deux bords longitudinaux (19, 25) et hors de la zone de la bande magnétique (13), au moyen de ladite au moins une transmission à courroie (32, 39).

23. Dispositif de transport selon l'une quelconque des revendications 1 à 22,
**caractérisé en ce que**
la courroie sans fin (33, 40) de la transmission à courroie respective (32, 39) court sensiblement dans la zone longitudinale d'un bord longitudinal de la surface d'appui respective (55, 56).

24. Dispositif de transport de supports d'informations, en particulier de cartes, avec une voie de transport (20) courant linéairement sur laquelle les supports d'informations (11) sont posés et transportés vers l'avant, selon une ou plusieurs des revendications précédentes,
**caractérisé en ce que**
la voie de transport (20) présente une bande entraînée (21) courant longitudinalement avec des entraîneurs (22) saillant vers le haut à distances prédéfinies au-dessus de sa face supérieure, la distance des entraîneurs (22) entre eux mesurée dans le sens longitudinal de la bande (21) étant supérieure à la longueur des supports d'informations respectifs (11).

25. Dispositif de transport selon l'une quelconque des revendications 1 à 24,
**caractérisé en ce que**
ladite au moins une transmission à courroie (32, 39) est disposée à côté de la bande (21) et court sensiblement parallèlement à celle-ci.

26. Dispositif de transport selon l'une quelconque des revendications 1 à 25,
**caractérisé en ce que**
le support d'informations (11) peut être transporté à plat sur la bande (21) jusqu'à la zone d'introduction (26) de ladite au moins une transmission à courroie (32, 40) et transmis au niveau de la zone d'introduction (26) à ladite au moins une transmission à courroie (32, 39) avec la bande (21) totalement désaccouplée.

27. Dispositif de transport selon l'une quelconque des revendications 1 à 26,
**caractérisé en ce que**
ladite au moins une transmission à courroie (32, 39) est entraînée à plus grande vitesse que la bande (21).

28. Dispositif de transport selon la revendication 27,
**caractérisé en ce que**
la différence de vitesse est sélectionnée de telle manière que le support d'informations respectif (11) réceptionné dans la zone d'introduction (26) de ladite au moins une transmission à courroie (32, 39), serré et transporté vers l'avant est évacué vers l'avant dans le sens longitudinal de la bande (21) par ses entraîneurs (22).

29. Dispositif de transport selon la revendication 27,
**caractérisé en ce que**
la différence de vitesse est sélectionnée de telle manière que le support d'informations respectif (11) libéré dans la zone d'évacuation (31) de ladite au moins une transmission à courroie (32, 39) est transmis à un segment de bande de la bande (21) situé entre deux entraîneurs (22) de la bande (21).

30. Dispositif de transport selon l'une quelconque des revendications 27 à 29,
**caractérisé en ce que**
la vitesse de ladite au moins une transmission à courroie (32, 39) est réglée sur une valeur supérieure d'environ 2% à celle de la bande (21).

31. Dispositif de transport selon l'une quelconque des revendications 1 à 30,
**caractérisé en ce que**
le moteur d'entraînement (48) de ladite au moins une transmission à courroie (32, 39) est réglé en fonction de la vitesse de la bande (21), de préférence au moyen d'un codeur d'angle (50) enregistrant la vitesse respective de la bande (21).

32. Dispositif de transport selon l'une quelconque des revendications 1 à 31,
**caractérisé en ce que**
la largeur de la bande (21) est inférieure à la largeur du support d'informations respectif (11) et que chaque support d'informations (11) repose sur la bande (21) et est transporté vers l'avant avec une zone plane (17) étroite courant perpendiculairement à la bande magnétique (13) et de telle sorte que la zone de la bande magnétique (13) ainsi qu'un ruban plat (18) du support d'informations (11) s'y raccordant perpendiculairement sont libres, et que le support d'informations (11), lorsqu'il atteint la zone d'introduction (26) de ladite au moins une transmission à courroie (32, 39), dans la zone du ruban plat (18) se raccordant perpendiculairement à la zone de la bande magnétique (13), peut être serré en libérant la zone de bande magnétique au moyen de la transmission à courroie (32, 39) et transporté vers l'avant en désaccouplant la bande (21).

33. Dispositif de transport selon l'une quelconque des revendications 24 à 32,
**caractérisé en ce que**
la bande (21) est formée par une courroie en caoutchouc, en caoutchouc synthétique, en plastique ou autre.

34. Dispositif de transport selon l'une quelconque des revendications 24 à 33,
**caractérisé en ce que**
les entraîneurs (22) sont formés par des traverses saillant vers le haut.

35. Dispositif de transport selon la revendication 34,
**caractérisé en ce que**
les traverses s'étendent sur toute la largeur de la bande (21).

36. Dispositif de transport selon l'une quelconque des revendications 24 à 35,
**caractérisé en ce que**
sur un côté longitudinal de la bande (21) à côté de celle-ci, est disposé un guide longitudinal (23) courant sensiblement parallèlement à celle-ci pour le bord longitudinal (19) orienté vers elle du support d'informations (11).

37. Dispositif de transport selon la revendication 36,
**caractérisé en ce que**
le guide longitudinal (23) s'étend dans le sens longitudinal sensiblement jusqu'à la zone d'introduction (26) de ladite au moins une transmission à courroie (32, 39).

38. Dispositif de transport selon l'une quelconque des revendications 36 ou 37,
**caractérisé en ce que**
sur le côté de la bande (21) opposé au guide longitudinal (23) est disposé un deuxième guide longitudinal (24) atteignant sensiblement la zone d'introduction (26).

39. Dispositif de transport selon l'une quelconque des revendications 36 à 38,
**caractérisé en ce que**
le guide longitudinal (23, 24) respectif présente du côté orienté vers le bord longitudinal (19, 25) du support d'informations (11) un profil en L ou un profil en U orienté et ouvert vers le côté.
